# EUROPÄISCHE PATENTSCHRIFT

(11) **EP 1 117 621 B1**
(45) Veröffentlichungstag und Bekanntmachung des Hinweises auf die Patenterteilung: **11.12.2002**
(21) Anmeldenummer: 99942810.5
(22) Anmeldetag: 04.08.1999
(51) Int. Cl.: C02F 5/10, C02F 1/56

(54) **MITTEL ZUR WASSERBEHANDLUNG**
MEDIA FOR WATER TREATMENT
SUBSTANCES DE TRAITEMENT D'EAU

(30) Priorität: 17.08.1998 DE 19837068
(43) Veröffentlichungstag der Anmeldung: 25.07.2001
(73) Patentinhaber: BAYER AG, 51368 Leverkusen (DE)
(72) Erfinder: KLEINSTÜCK, Roland, D-51467 Bergisch Gladbach (DE); GROTH, Torsten, D-51519 Odenthal (DE); JOENTGEN, Winfried, D-51067 Köln (DE)
(86) Internationale Anmeldenummer: EP9905640
(87) Internationale Veröffentlichungsnummer: WO00010928

(56) Entgegenhaltungen:
- WO-A-97/39078
- GB-A- 1 584 170

## Beschreibung

Die vorliegende Erfindung betrifft Mittel zur Wasserbehandlung auf Basis von biologisch abbaubaren Polymeren mit wiederkehrenden Succinyleinheiten, bioziden Oxidationsmitteln und einer gegebenenfalls substituierten Amidosulfonsäure, ihre Verwendung in, sowie das Verfahren zur Wasserkonditionierung von Kühlkreisläufen.

Bei der Nutzung von natürlichen Wässern für industrielle Zwecke, z.B. als Kühlwasser, wird das eingesetzte Wasser physikalisch und/gegebenenfalls auch chemisch gezielt oder auch unbeabsichtigt verändert. So sind beispielsweise in offenen Umlaufkühlsystemen Temperaturveränderungen, Eindickung sowie eine pH-Erhöhung, die durch den Kohlendioxidaustrag im Kühlturm bewirkt wird, unvermeidbar.

Durch Eindickung und pH-Erhöhung über CO₂-Austrag steigt die Konzentration an Härtebildnern, insbesondere Calcium- und Carbonationen, an. Wenn sich die natürlichen Wässer vor Einsatz im Gleichgewicht befanden (Kalk-Kohlensäure-Gleichgewicht), so führt ein Anstieg der Konzentration der Härtebildner zu einer Übersättigung. Zur Verhinderung von Steinablagerungen (Inkrustationen) insbesondere auf Wärmeübertragungsflächen ist eine Behandlung der Wässer durch Zusatz von Additiven ("Steininhibitoren") nötig.

Ein weiterer, zum Teil sogar der überwiegende Zweck des Additiveinsatzes bei der Wasserbehandlung ist der Schutz metallischer Werkstoffe vor Korrosion. Zum Beispiel ist bei Verwendung unlegierter Kohlenstoffstähle in offenen Umlaufkühlsystemen eine ausreichende Korrosionsinhibierung erwünscht, da die in solchen Systemen herrschenden Bedingungen (Sauerstoffsättigung, Salzanreicherung) zu einer Beschleunigung der Korrosion führen.

In WO 97/39078 wird der Einsatz von biologisch abbaubaren Polymeren wie beispielsweise von Polyasparaginsäure oder von sonstigen Asparaginsäure-haltigen Polymeren in Verbindung mit biozid wirkenden Oxidationsmitteln zur Wasserkonditionierung in Kühlkreisläufen vorgeschlagen.

Beschrieben werden u.a. Versuche, bei denen 10 mg/l Polyasparaginsäure mit einem Molekulargewicht von etwa 3.000 in Gegenwart von 0,4 mg/l Natriumhypochlorit auf steininhibierende Wirksamkeit geprüft wurden und über die Meßzeit von 4 Stunden kein Abfall der steininhibierenden Wirkung feststellbar war. Bei Zusatz von 0,4 mg/l einer Mischung aus Natriumhypochlorit und Natriumhypobromit im Gewichtsverhältnis 1:1 waren nach 4 Stunden noch 95 % der Ausgangswirkung vorhanden.

Weiter wurde in einem Kühlkreislauf mit Kühlturm über einen Monat die Konzentration von Polyasparaginsäure ohne und mit Zusatz von 0,2 mg/l Chlor in Form von Natriumhypochlorit überprüft: Ohne Chlorzusatz stellte sich bei täglichen Dosierungen von 20 bis 50 mg/l Polyasparaginsäure eine Konzentration von zwischen 11 mg/l und 2 mg/l, mit Chlorzusatz von etwa 20 mg/l ein.

Nachteilig an den Mischungen der WO 97/39078 ist die Tatsache, daß die dort eingesetzten Polymere mit den Mikrobiziden wie Chlor, Brom oder Halogen-abspaltenden Produkten in erheblichem Maße reagieren, was sich durch Rückgang der Biozid-Konzentration bemerkbar macht.

Es muß damit gerechnet werden, daß durch die Reaktion mit dem Biozid auch Anteile an Polyasparaginsäure zerstört werden und daß dadurch die gewünschte stein- und/oder korrosionsinhibierende Wirksamkeit nicht mehr erreicht wird.

In vielen Fällen dürfte es zwar möglich sein, zumindest in gewissem Umfang durch Höherdosierung der Polyasparaginsäure einen Ausgleich zu schaffen, jedoch leidet darunter die Wirtschaftlichkeit des Polyasparaginsäureeinsatzes.

Daher bestand die Aufgabe der vorliegenden Erfindung darin, ein Mittel zur Wasserbehandlung auf Basis von Polymeren mit wiederkehrenden Succinyleinheiten zur Verfügung zu stellen, dessen Komponenten über lange Zeit hinweg stabil bleiben, so daß der Einsatz auch in Kühlkreisläufen, speziell in solchen mit längeren Verweilzeiten, wirtschaftlich vertretbar wird.

Die Aufgabe wurde dadurch gelöst, daß man Polymere mit wiederkehrenden Succinyleinheiten mit biozid wirkenden Oxidationsmitteln mischt und als Stabilisator gegebenenfalls substituierte Amidosulfonsäure zusetzt. Der Stabilisator hat dabei die Aufgabe, die Reaktion zwischen Polymer und Oxidationsmitttel zu unterbinden bzw. wesentlich zu reduzieren.

Zwar ist der Einsatz von Ammoniak, Aminen, Amiden oder auch Amidosulfonsäuren als Stabilisatoren für Chlor aus US-P 4,711,724 und US-P 3,170,883 bekannt und in US-P 4,642,194 wird der Einsatz von Amidosulfonsäuren und organischen Sulfonamiden (EP-A 0 569 220) als Stabilisatoren für spezielle Phosphonsäuren gegenüber Chlor und in US-P 4,759,852 auch gegenüber Brom beschrieben, aber die Verwendung von Amidosulfonsäure und organischen Derivaten der Amidosulfonsäure zur Stabilisierung von Polyasparaginsäure gegenüber Chlor und Brom ist bisher nicht in der Literatur erwähnt.

Die hohe Wirksamkeit des Amidosulfonsäure-Zusatzes zur Stabilisierung von Halogen gegenüber Polymeren mit wiederkehrenden Succinyleinheiten ist für den Fachmann überraschend, da in den Polymeren selbst Amid-Strukturen enthalten sind. Der Zusatz eines weiteren Amids sollte daher wenig Wirkung erwarten lassen. Überraschenderweise konnte dadurch die Reaktion zwischen oxidierendem Biozid und Polymer wesentlich reduziert werden.

Die vorliegende Erfindung betrifft daher die Verwendung von Polymeren mit wiederkehrenden Succinyleinheiten, insbesondere von Polyasparaginsäuren als Mittel zur Wasserbehandlung in Verbindung mit einem Biozid und Amidosulfonsäure H₂NSO₃H oder organischen Derivaten der Amidosulfonsäure, sowie die Anwendung dieser Mittel zur Wasserkonditionierung von Kühlkreisläufen.

Die erfindungsgemäß verwendeten Polymere weisen wiederkehrende Succinyl-Einheiten mit einer der folgenden Strukturen auf: 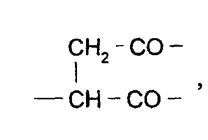 bevorzugt

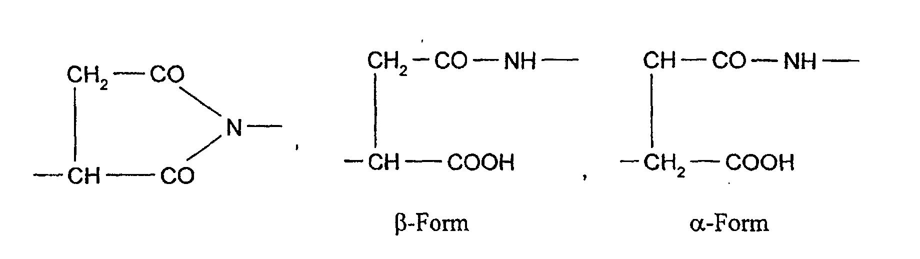

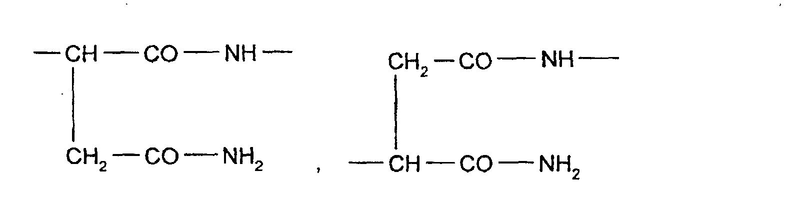

Zusätzlich können durch geeignete Reaktionsführung und Wahl der Edukte weitere wiederkehrende Einheiten enthalten sein, z. B.
a) Äpfelsäure-Einheiten der Formel 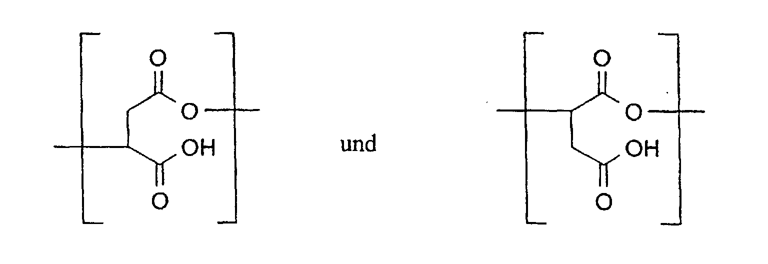
b) Maleinsäure und Fumarsäure-Einheiten der Formel

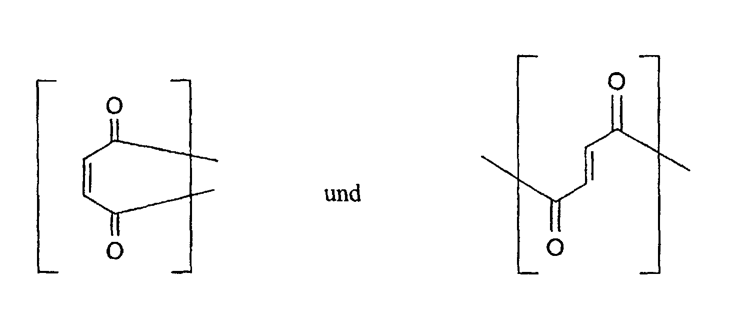

Die Analyse der chemischen Struktur erfolgt vorzugsweise mit ¹³C-NMR, FT-IR und nach Totalhydrolyse mit HPLC, GC und GC/MS.

Bei vielen Herstellungsverfahren fallen nicht die reinen Säuren sondern zunächst die entsprechenden Anhydride, beispielsweise Polysuccinimid (= PSI) an. Derartige Polymerisationsprodukte können durch Umsetzung mit einer Base gegebenenfalls in Gegenwart von Wasser in ein PAA-haltiges Salz überführt werden. Diese Umwandlung von PSI-haltigen in PAA-haltige Polymere geschieht anschließend in einer geeigneten Vorrichtung durch Hydrolyse. Bevorzugt ist dabei ein pH-Wert zwischen 5 und 14 geeignet. In besonders bevorzugter Form wird ein pH-Wert von 7 bis 12 gewählt, insbesondere durch den Zusatz einer Base. Geeignete Basen sind Alkaliund Erdalkalihydroxide oder Carbonate wie beispielsweise Natronlauge, Kalilauge, Soda oder Kaliumcarbonat, Ammoniak und Amine wie Triethylamin, Triethanolamin, Diethylamin, Diethanolamin, Alkylamine etc. Besonders bevorzugt sind neben freien Säuren deren Na-, K- oder Ca-Salze.

Die Temperatur bei der Hydrolyse liegt geeigneter Weise in einem Bereich einschließlich bis zum Siedepunkt der PSI-Suspension und bevorzugt bei 20 bis 150°C. Die Hydrolyse wird gegebenenfalls unter Druck durchgeführt.

Es ist jedoch auch möglich, durch rein wäßrige Hydrolyse oder Behandlung des Salzes mit Säuren oder sauren Ionenaustauschern die freie Polyasparaginsäure zu erhalten. Der Begriff "Polyasparaginsäure" (= PAA) umfaßt bei der vorliegenden Erfindung ebenfalls die Salze, falls nicht ausdrücklich anders dargestellt.

Die fertige Polyasparaginsäure bzw. die Salze der Polyasparaginsäure werden durch Trocknung, bevorzugt Sprühtrocknung, erhalten.

Bevorzugte Polymere haben ein Molekulargewicht nach gelpermeationschromatographischen Analysen von MW = 500 bis 10.000, bevorzugt 700 bis 5.000, besonders bevorzugt 1.000 bis 4.500. Im allgemeinen liegt der Anteil der beta-Form bei mehr als 50 %, bevorzugt bei mehr als 70 %.

Die Konzentration der einzusetzenden Polyasparaginsäuren für die Wasserbehandlung liegt üblicherweise bei ca. 0,5 bis 100 mg/l Wirkstoff in der wäßrigen Phase, meist aber im Bereich von ca. 2 bis 50 mg/l.

Zur Lösung der Aufgabe der vorliegenden Erfindung werden zusätzlich Biozide eingesetzt. Vorzugsweise werden biozid wirkende Oxidationsmittel mit einem positiveren Standard-Redoxpotential als Sauerstoff eingesetzt.

Standard-Redoxpotentiale, auch als Normal-Potentiale bezeichnet, stellen allgemein bekannte thermodynamische Begriffe dar, die in Lehrbüchern der allgemeinen oder der physikalischen Chemie beschrieben werden. Beispielsweise genannt sei das Kapitel 11 des Lehrbuchs: H.R. Christen "Grundlagen der allgemeinen und anorganischen Chemie", Verlag Sauerländer-Salle, 1973. Dieses Lehrbuch enthält auf den Seiten 692 bis 697 eine Liste unterschiedlicher Normal-Potentiale, wie sie auch in vielen anderen Lehrbüchern und Tabellenwerken gefunden werden kann. Die Größe des Standard-Redoxpotentials wird üblicherweise in Volt angegeben.

Vorzugsweise setzt man für den erfindungsgemäßen Verwendungszweck Oxidationsmittel mit einem Standard-Redoxpotential von größer als 0,4 Volt ein. Vorzugsweise wählt man als Oxidationsmittel Wasserstoffperoxid, Chlor, Brom, Chlordioxid, Hypochlorite, Hypobromite und Ozon. Da diese Chemikalien mit Wasser-Säure-Base- und/oder Disproportionierungs-Reaktionen eingehen können, werden unter den vorstehend genannten Oxidationsmitteln auch deren Umsetzungsprodukte mit Wasser verstanden.

Die Biozide werden in den erfindungsgemäßen Mitteln zur Wasserbehandlung in Konzentrationen von 0,05 bis 20 mg/l eingesetzt. Bevorzugt werden 0,05 bis 10 mg/l, insbesondere bevorzugt 0,1 bis 5 mg/l Biozid eingesetzt.

Als Stabilisatoren der Biozide werden gegebenenfalls substituierte Amidosulfonsäuren der Formel (I) 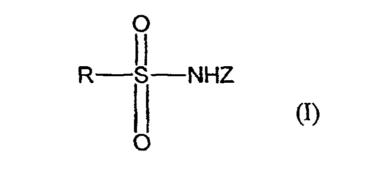 eingesetzt, worin
- Z: für Wasserstoff, Lithium, Natrium, Kalium, Magnesium oder Calzium steht und
- R: für einem gegebenenfalls substituierten Rest der Reihe OH, C₁-C₄-Alkyl, C₁-C₄-Alkoxy, Amino, Mono(C₁-C₄-alkyl)amino, Di(C₁-C₄-Alkyl)amino, Formylamino, -NHC(O)C₁-C₄-Alkyl, -NHC(O)OC₁-C₄-Alkyl, C₂-C₆-Alkenyl, C₂-C₆-Alkinyl, C₃-C₇-Cycloalkyl, gegebenenfalls substituiertes Phenyl, Naphthyl, Pyridyl, Pyrimidyl, Pyrazyl, Pyridazyl, Pyrrolyl, Imidazolyl, Pyrazolyl, Triazolyl, Tetrazolyl steht,
wobei jeweils als Substituenten infrage kommen: C₁-C₄-Alkyl, C₁-C₄-Alkoxy, C₁-C₄-Alkoxycarbonyl, Halogen, Nitro, Nitrilo, Carboxy, -S(O)ₙC₁-C₄-Alkyl worin n = 2 bedeutet und gegebenenfalls am Stickstoff durch eine oder zwei C₁-C₄-Alkylgruppen substituiert ist, Sulfamoyl, -SO₂N(R¹)R² wobei R¹ und R² jeweils C₁-C₄-Alkyl bedeuten.

Bevorzugt wird eine gegebenenfalls substituierten Amidosulfonsäure der Formel (I) eingesetzt, worin R für OH, -C₆H₄-CH₃ (Tolyl) und OCH₃ steht und Z für Wasserstoff, Natrium und Kalium steht.

Insbesondere bevorzugt ist die Amidosulfonsäure der Formel (I) worin R für OH und Z für Wasserstoff steht.

Die Stabilisatoren werden in Mengen von 0,02 bis 15 mg/l eingesetzt. Bevorzugt werden 0,1 bis 10 mg Stabilisator, insbesondere 0,2 bis 5 mg Stabilisator pro 1 eingesetzt.

Es ist üblich und im Sinne der Erfindung vorzuziehen, daß die Wasserphase der wäßrigen Kühlsysteme zusätzlich weitere Komponenten enthält, die Korrosions- oder Scale-inhibierend oder dispergierend wirken können. Beispielsweise genannt seien: 1 bis 10 mg/l Zinkionen, 1 bis 200 mg/l monomere oder oligomere Molybdationen, organische Phosphate in einer Konzentration, daß der Phosphorgehalt, berechnet als Phosphat, im Bereich 1 bis 20 mg/l Phosphat liegt, monomere, oligomere oder polymere anorganische Phosphate in einer Konzentration, daß der Phosphorgehalt, berechnet als Phosphat, im Bereich 1 bis 20 mg/l Phosphat liegt, sowie Buntmetallinhibitoren wie beispielsweise Triazole. Als weitere Korrosionsschutzkomponenten kann die Wasserphase bekannte Wirkstoffe enthalten wie beispielsweise Alkanolamine, insbesondere Triethanolamin, Borate, Sorbitol, Nitrite, Nitrate und Silicate. Als weitere Additive mit korrosionsinhibierender und/oder dispergierender Wirkung können eingesetzt werden: Phosphatester, Polyphosphorsäureester, Aminophosphate, Aminomethylenphosphonsäuren, Phosphonate, insbesondere Hydroxyalkandiphosphonsäuren, Hydroxyphosphonoessigsäure, Aminoalkylenphosphonsäuren, Phosphoncarbonsäuren, Bernsteinsäureamid, Glukonate, Polyoxycarbonsäuren und deren Copolymere, Tanninderivate, Ligninsulfonate, sulfonierte Kondensationsprodukte des Naphthalins mit Formaldehyd, Polyacrylate, Polymethylacrylate, Polyacrylamide, Polymaleinate, Copolymere von Acrylsäure bzw. Methacrylsäure, Maleinsäure und Acrylamid, Phosphinsäure-haltige Homo- und Copolymere von Acrylsäure und Acrylamid, oligomere Phosphino-Bernsteinsäure-Verbindungen, sulfomethylierte oder sulfoethylierte Polyacrylamide und Copolymere bzw. Terpolymere mit Acrylsäure, Maleinsäure, N-Butylacrylamid, Acrylamidopropionsulfonsäure, Maleinsäureanhydrid-Polymere und Copolymere, phosphinoalkylierte Acrylamidpolymere und Copolymere mit Acrylsäure, Citronensäure, Ethercarboxylate oder oxydierte Kohlehydrate.

Um eimem optimalen Korrosionsschutz zu erreichen, stellt man die Wasserphase der wäßrigen Kühlsysteme vorzugsweise auf einen pH-Wert im Bereich von etwa 7 bis etwa 9 ein. Die Dosierung der biozid wirkenden Oxidationsmittel in das Kühlsystem kann kontinuierlich oder vorzugsweise diskontinuierlich in Form einer Stoßbehandlung erfolgen.

Bei den wäßrigen Kühlsystemen kann es sich um Durchflußsysteme oder um offene oder geschlossene Kreislaufsysteme handeln. Die Erfindung ist besonders konzipiert zum Einsatz in offenen Kreislaufsystemen, da sie insbesondere geeignet ist, den in derartigen Systemen auftretenden Problemen der Scale-Bildung, der Bildung von Niederschlägen und/oder der biologischen Verunreingung entgegenzuwirken.

Die erfindungsgemäßen Mittel können vielfältig genutzt werden, beispielsweise als Steininhibitoren (scale inhibitor) wie auch als Korrosionsinhibitoren und Biozide. Einsatzgebiete solcher Mittel können z.B. sein: Wasserbehandlung (z.B. Behandlung von Kühlwässern, Prozeßwässem, Gaswaschwässern, Einpreßwässern bei der sekundären Ölförderung und Wasserbehandlung im Bergbau).

Die vorliegende Erfindung betrifft weiterhin ein Verfahren zur Wasserbehandlung, welches dadurch gekennzeichnet ist, daß man das erfindungsgemäße Mittel in das zu behandelnde Wasser einträgt.

Das Verfahren zur Wasserbehandlung soll im folgenden an Beispielen erläutert werden:

Zum Beispiel werden die erfindungsgemäßen Mittel zur Verhinderung von Ablagerungen und Belägen beim Einsatz in Kühlsystemen mit Frischwasserkühlung dem einlaufenden Wasser in Konzentrationen zwischen etwa 0,1 und 10 mg/l Wirkstoff zugesetzt.

In Kühlkreisläufen erfolgt die Dosierung der Additive zum Stein- und/oder Korrosionsschutz häufig mengenunabhängig bezogen auf das Zusatzwasser. Die Konzentrationen liegen zwischen etwa 1 und 100 mg/l Wirkstoff im umlaufenden Kühlwasser.

### Beispiel 1

In einer Klarglasflasche wurde 1 l Kühlwasser mit einer Gesamthärte SE = 3,0 mmol/l (≙ 17° dGH), davon 80 mol% Ca-Härte, und K_{S 4,3} = 3,2 mmol/l (≙ 9° dKH) mit 10 mg/l Polyasparaginsäure-Natriumsalz und mit 5 ml einer verdünnten Bleichlauge-Lösung des Gehaltes 1.000 mg/l als Chlor versetzt. Der pH-Wert wurde mit Salzsäure auf 7,0 eingestellt, die Flasche verschlossen und 24 h bei RT gelagert.

Analoge Proben wurden hergestellt mit folgenden Varianten:
- pH-Einstellung auf 8,5 durch Natronlaugezusatz,
- Zugabe von Natriumbromid (1 mg/l Br)
- Zugabe von 5 mg/l Amidosulfonsäure.

Nach der Lagerung wird der Chlorgehalt in den Proben analysiert (DPD-Methode nach Palin)*:

| Nr. | pH | Bromid-Gehalt | Amidosulfonsäuregehalt | Chlorgehalt nach 24 h |
|---|---|---|---|---|
| 1 | 7,0 | 0 | 0 | 0,9 mg/l |
| 2 | 7,0 | 0 | 5 mg/l | 2,4 mg/l |
| 3 | 7,0 | 1 mg/l | 0 | 0,8 mg/l |
| 4 | 7,0 | 1 mg/l | 5 mg/l | 2,4 mg/l |
| 5 | 8,5 | 0 | 0 | 0,8 mg/l |
| 6 | 8,5 | 0 | 5 mg/l | 2,1 mg/l |
| 7 | 8,5 | 1 mg/l | 0 | 0,3 mg/l |
| 8 | 8,5 | 1 mg/l | 5 mg/l | 2,3 mg/l |

* Literatur: M. Zimmermann (Hrsg.) Photometrische Metall- und Wasseranalyse, Wissenschaftl. Verlagsgesellschaft, Stuttgart 1974, Methode B-C 1/3, Variante 2:
Bestimmung des "gesamten wirksamen Chlors", incl. Chloraminen

### Erläuterung von Beispiel 1:

Unter pH-Bedingungen, wie sie in Kühlwässern häufig anzutreffen sind, wurde die Reaktion von Polyasparaginsäure (10 mg/l als Na-Salz) mit Bleichlauge (5 mg/l als Chlor) untersucht.

Beim Lagern bei Raumtemperatur ist, wie Versuche Nr. 1 und Nr. 5 zeigen, sowohl bei pH 7 wie auch bei pH 8,5 nach 24 h>80% der Bleichlauge abreagiert, lediglich 0,9 mg/l (pH 7) bzw. 0,8 mg/l (pH 8), jeweils gemessen als Chlor, wurden wiedergefunden.

Der Zusatz von Bromid verstärkt den Abbau, speziell bei pH 8,5, zusätzlich. [Bromid wird unter den in dieser Anmeldung vorliegenden Versuchsbedingungen von Bleichlauge zu Hypobromiger Säure oxidiert, deren Biozidwirkung insbesondere bei pH 8,5 wesentlich stärker ist als die der Bleichlauge.]

Durch die Zugabe von Amidosulfonsäure (Versuche Nr. 2, 4, 6, 8) wird unter sonst gleichen Bedingungen die Reaktion zwischen Polyasparaginsäure und Bleichlauge (bzw. bei Zusatz von Bromid, Versuche Nr. 4 und 8, in zusätzlicher Gegenwart von unterbromiger Säure) wesentlich reduziert: Die Restgehalte an Oxidationsmittel sind im Faktor 2,67 (Vergleich Versuche nr. 1 und 2) bis 7,67 (Vergleich Versuche 7 und 8) höher.

Da die chemische Reaktion von Chlor mit PAA, deren Fortschritt in dieser Anmeldung am Verbrauch von Oxidationsmittel gemessen wurde, nicht nur das Biozid zerstört, sondern vermutlich auch das Polymer, ist die Abbaureaktion doppelt schädlich: Das zum Schutz des Polymers gegen biologischen Abbau zugesetzte Biozid geht verloren und kann das Polymer nicht mehr schützen und das Polymer selbst kann seine gewünschte Wirkung (Korrosions- und Steinschutz) nicht mehr entfalten.

### Beispiel 2

### (Versuchsdurchführung siehe Beispiel 1)

Variante: Lagerung der Flaschen über 24 h bei 60°C

### Ergebnisse:

| Nr. | pH | Bromid-Gehalt | Amidosulfonsäuregehalt | Chlorgehalt nach 24 h |
|---|---|---|---|---|
| 1 | 7,0 | 0 | 0 | ca. 0,1 mg/l |
| 2 | 7,0 | 0 | 5 mg/l | 1,9 mg/l |
| 3 | 7,0 | 1 mg/l | 0 | ca. 0,1 mg/l |
| 4 | 7,0 | 1 mg/l | 5 mg/l | 2,5 mg/l |
| 5 | 8,5 | 0 | 0 | ca. 0,1 mg/l |
| 6 | 8,5 | 0 | 5 mg/l | 1,2 mg/l |
| 7 | 8,5 | 1 mg/l | 0 | ca. 0,1 mg/l |
| 8 | 8,5 | 1 mg/l | 5 mg/l | 1,8 mg/l |

## Patentansprüche

1. Mittel zur Wasserbehandlung enthaltend
a) biologisch abbaubare organische Polymere mit wiederkehrenden Succinyleinheiten
b) ein biozid wirkendes Oxidationsmittel
c) eine gegebenenfalls substituierte Amidosulfonsäure.

2. Mittel zur Wasserbehandlung gemäß Anspruch 1, **dadurch gekennzeichnet, daß** Amidosulfonsäure der Formel
H₂ NSO₃H
eingesetzt wird.

3. Mittel zur Wasserbehandlung gemäß der Ansprüche 1 und 2, **dadurch gekennzeichnet, daß** die biologisch abbaubaren organischen Polymere wiederkehrende Succinyleinheiten der Strukturen 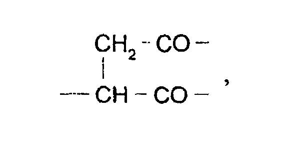 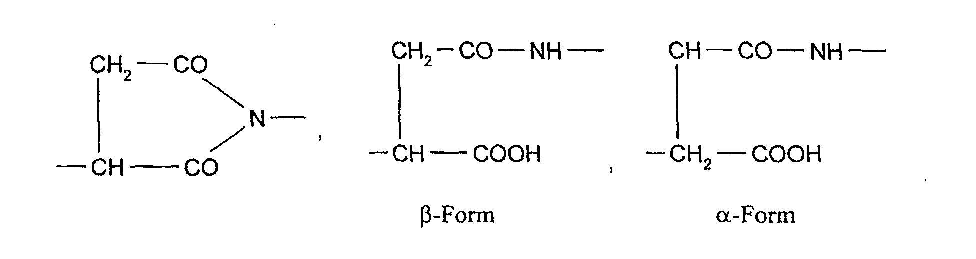 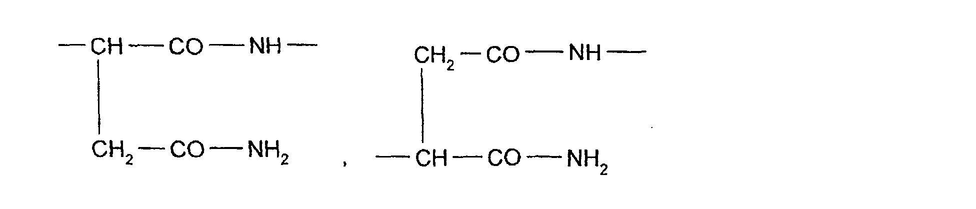 aufweisen.

4. Mittel zur Wasserbehandlung gemäß der Ansprüche 1 bis 3 **dadurch gekennzeichnet, daß** die biologisch abbaubaren organischen Polymere wiederkehrende Einheiten der Formeln
a) Äpfelsäure-Einheiten der Formel 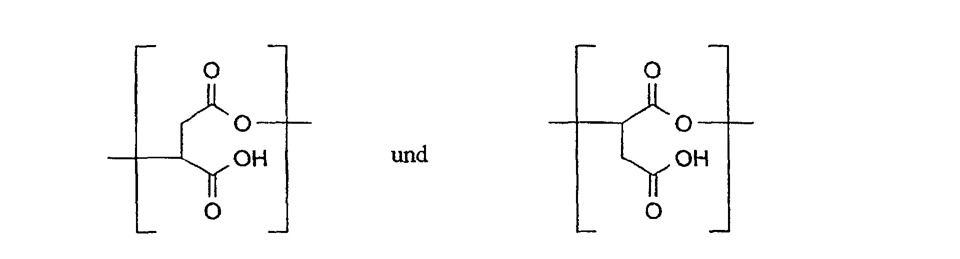
b) Maleinsäure und Fumarsäure-Einheiten der Formel 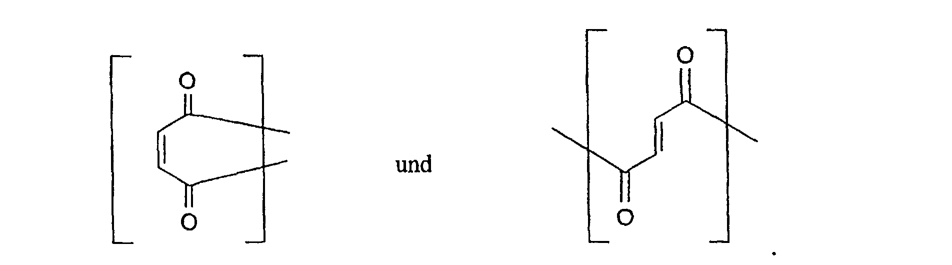 enthalten.

5. Mittel zur Wasserbehandlung gemäß der Ansprüche 1 bis 4, **dadurch gekennzeichnet, daß** als biozid wirkende Oxidationsmittel Wasserstoffperoxid, Chlor, Brom, Chlordioxid, Hypochlorit, Hypobromit, Ozon oder deren Umsetzungsprodukte mit Wasser eingesetzt werden.

6. Verwendung der Mittel gemäß Anspruch 1 zur Wasserkonditionierung in Kühlkreisläufen.

7. Verfahren zur Wasserkonditionierung in Kühlkreisläufen, **dadurch gekennzeichnet, daß** man Mittel gemäß Anspruch 1 einsetzt.

## Claims

1. Composition for water treatment comprising
a) biodegradable organic polymers having repeating succinyl units
b) a biocidal oxidizing agent
c) an unsubstituted or substituted amidosulphonic acid.

2. Composition for water treatment according to Claim 1, **characterized in that** amidosulphonic acid of the formula
H₂ NSO₃H
is used.

3. Composition for water treatment according to Claims 1 and 2, **characterized in that** the biodegradable organic polymers have repeating succinyl units of the structures

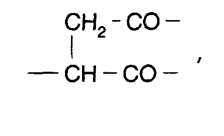

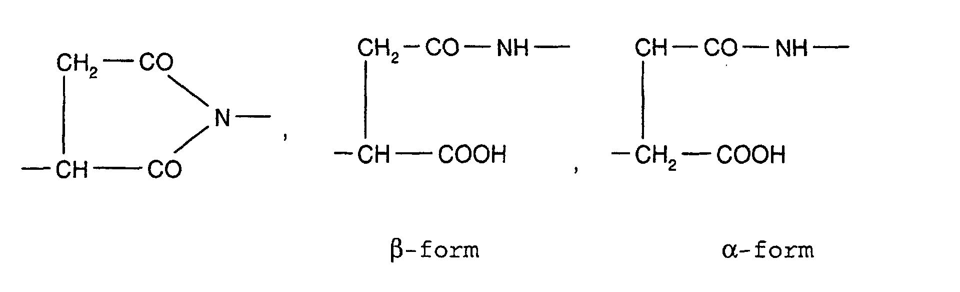

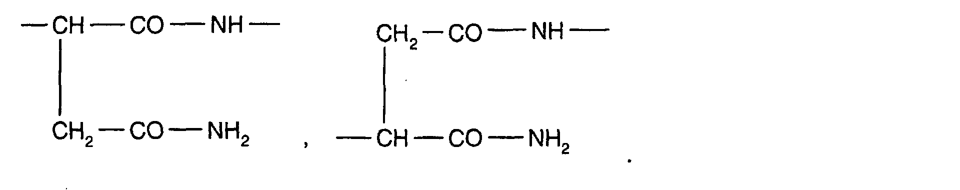

4. Composition for water treatment according to Claims 1 to 3, **characterized in that** the biodegradable organic polymers contain repeating units of the formulae
a) maleic acid units of the formula 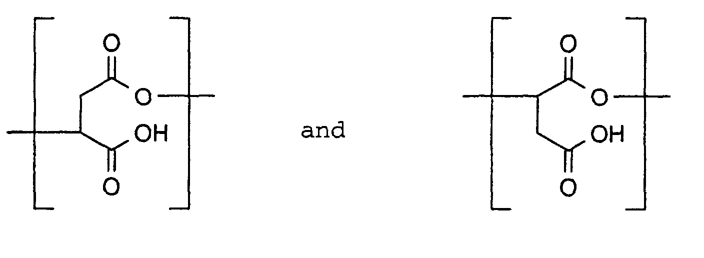
b) maleic acid and fumaric acid units of the formula

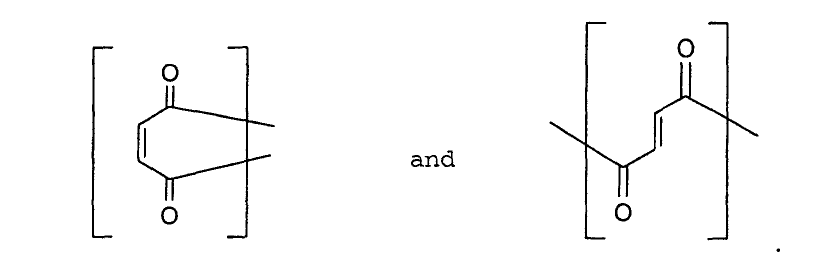

5. Composition for water treatment according to Claims 1 to 4, **characterized in that** the biocidal oxidizing agent is hydrogen peroxide, chlorine, bromine, chlorine dioxide, hypochlorite, hypobromite, ozone or their reaction products with water.

6. Use of the compositions according to Claim 1 for water conditioning in cooling circuits.

7. Process for water conditioning in cooling circuits, **characterized in that** compositions according to Claim 1 are used.

## Revendications

1. Agent pour le traitement des eaux, contenant :
a) des polymères organiques biologiquement dégradables, avec des unités succinyle récurrentes ;
b) un agent d'oxydation agissant comme biocide ;
c) un acide amidosulfonique le cas échéant substitué.

2. Agent pour le traitement des eaux suivant la revendication 1, **caractérisé en ce que** l'on met en oeuvre un acide amidosulfonique de la formule :
H₂NSO₃H

3. Agent pour le traitement des eaux suivant les revendications 1 et 2, **caractérisé en ce que** les polymères organiques biologiquement dégradables présentent des unités succinyle récurrentes des structures :

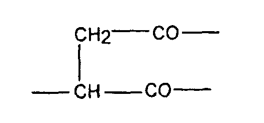

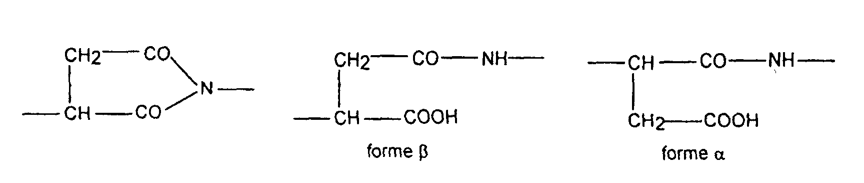

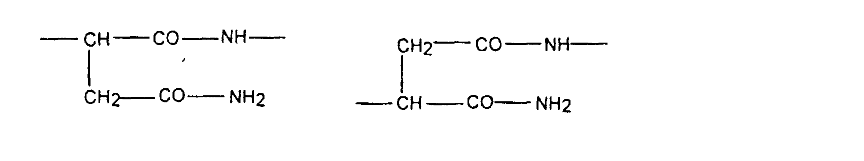

4. Agent pour le traitement des eaux suivant les revendications 1 à 3, **caractérisé en ce que** les polymères organiques biologiquement dégradables contiennent des unités récurrentes des formules :
a) unités acide malique de formule : 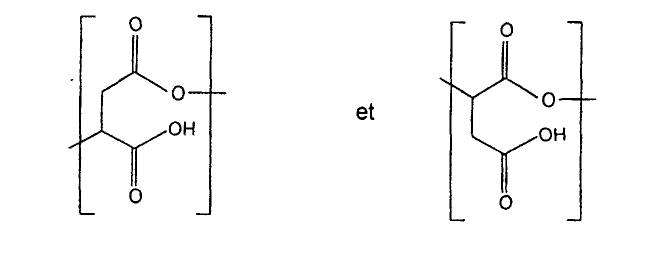
b) des unités acide maléique et acide fumarique de formule :

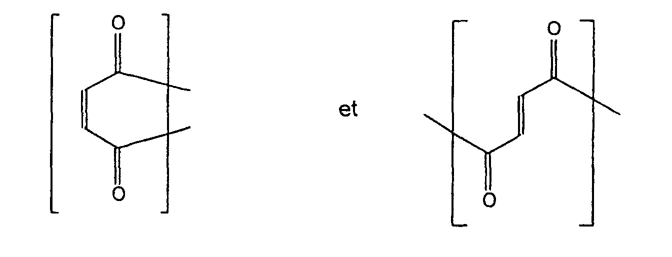

5. Agent pour le traitement des eaux suivant les revendications 1 à 4, **caractérisé en ce que** l'on met en oeuvre comme agent d'oxydation agissant comme biocide, du peroxyde d'hydrogène, du chlore, du brome, du dioxyde de chlore, de l'hypochlorite, de l'hypobromite, de l'ozone ou leurs produits de réaction avec l'eau.

6. Utilisation de l'agent selon la revendication 1, pour le conditionnement d'eau dans les cycles de réfrigération.

7. Procédé de conditionnement d'eau dans les cycles de réfrigération, **caractérisé en ce que** l'on met en oeuvre un agent suivant la revendication 1.
